Europäisches Patentamt

European Patent Office

Office européen des brevets

(11) Publication number: **0 560 453 A1**

# EUROPEAN PATENT APPLICATION

(21) Application number: 93200693.5

(22) Date of filing: 10.03.93

(51) Int. Cl.⁵: **F02K 3/02**, F02C 6/20, F02C 9/18, F02K 3/075, F04D 29/32, F01D 5/14

(30) Priority: 10.03.92 US 850452

(43) Date of publication of application:
15.09.93 Bulletin 93/37

(84) Designated Contracting States:
DE FR GB NL

(71) Applicant: THE BOEING COMPANY
P.O. Box 3707 M.S. 6Y-25
Seattle WA 98124-2207(US)

(72) Inventor: Klees, Garry W.
7515 S.E. 76th Street
Mercer Island, WA 98040(US)

(74) Representative: Hoijtink, Reinoud et al
OCTROOIBUREAU ARNOLD & SIEDSMA
Sweelinckplein 1
NL-2517 GK Den Haag (NL)

(54) **Turbojet engine with supersonic compression.**

(57) Engine for supersonic cruise aircraft comprising a supersonic compressor (114) capable of operating in a supersonic compression mode, the compressor being so mounted upstream of a core engine assembly (116,120,122) within an engine nacelle that the entire exit flow of the supersonic compressor enters the core engine assembly when the aircraft is operating at transonic and supersonic speeds. Preferably, the compressor is further capable of operating in a subsonic compression mode when the aircraft is operating at subsonic speeds. In this case, a portion of the exit flow of the supersonic compressor bypasses (126,130) the core engine assembly. The engine may further comprise means for diverting a portion of the compressor exit flow to the exterior (128) of the engine nacelle when the aircraft is operating subsonically.

FIG. 3

TECHNICAL FIELD

The present invention relates to engines for supersonic cruise aircraft, and, more particularly, to such engines capable of efficient operation at both supersonic and subsonic speeds.

BACKGROUND OF THE INVENTION

The requirement has long been felt for an aircraft which is capable of operating effectively in the supersonic range and yet which has the capability of cruising subsonically with a relatively low specfic fuel consumption (SFC). Military aircraft, for example, must be capable of developing very high thrusts for acceleration and operation in the high supersonic range. Yet for many mission requirements, such as remaining aloft for long periods of time or traveling to and from the areas where the mission is to be carried out, military aircraft must be capable of extended subsonic cruise with low SFC.

Supersonic cruise civilian aircraft such as the High Speed Civil Transport (HSCT) aircraft must also be capable of efficient operation at supersonic cruise. Such aircraft must additionally be capable of operating over densely populated areas at subsonic speeds to avoid the creation of supersonic booms over such areas. These aircraft must thus be capable of operating with low SFC when traveling subsonically.

In general, the operating components of an engine designed for use on such supersonic cruise aircraft are so matched with one another that the engine operates efficiently at high power settings for acceleration and cruise; however, the same matching of engine components does not necessarily lend itself to efficient engine operation at subsonic cruise.

Prior Art

Of the engines available for use on supersonic cruise aircraft, it is generally recognized that the turbojet engine is the most efficient from a weight, drag, and SFC standpoint when operating at supersonic cruise speeds. The turbojet engine is not, however, as efficient as other engines when operating under off-design take-off and subsonic cruise conditions. The SFC of turbojet engines operating at subsonic speeds has been improved by: (a) variable area turbines which effectively regulate the turbine nozzle area according to the amount of thrust required of the engine and/or (b) providing a bypass passageway for bypassing gaseous flow exiting from the compressor around the turbine to maintain the turbine at or near its optimum operating conditions. Turbine bypass turbojet engines are disclosed, for example, in U.S. Patents No. 3,854,286, 4,287,715, 4,294,068, and 4,448,019 issued to the Applicant.

However, turbojet engines, with or without variable area turbines and/or turbine bypass, have high jet noise because of their exceptionally high specific thrust. For a variety of reasons, it has proven exceedingly difficult to develop effective and efficient noise suppressors for turbojets. Accordingly, the use of turbojet engines on aircraft operating near densely populated areas is limited by noise level regulations.

Conventional turbofan engines are also available for use on supersonic cruise aircraft. Such engines exhibit lower jet noise and good subsonic SFC; however, these engines must be increased in size to provide sufficient thrust to overcome drag at transonic and supersonic speeds. These larger engines with higher bypass ratios have low SFC at supersonic speeds than; however they are large and heavy and have higher drag than turbojet engines. Additionally, conventional turbofan or turbojet engines require an inlet system to diffuse the airflow entering the engine to subsonic speeds. Such inlet systems increase weight and introduce losses. Finally, conventional turbofan or turbojet engines require a subsonic compression process. Also, the conventional turbofan has the undesireable characteristic that fan airflow and pressure ratio decreases with increasing supersonic speed. This leads to an increased outlet corrected flow that cannot be all swallowed by the core engine, causing an undesirable bypass ratio increase at supersonic cruise. Conventional turbofan engines are generally disclosed in U.S. Patent No. 4,435,958 issued to the applicant and in Franciscus, Supersonic Through-Flow Fan Engines for Supersonic Aircraft, NASA Technical Memorandum 78889, April 1978.

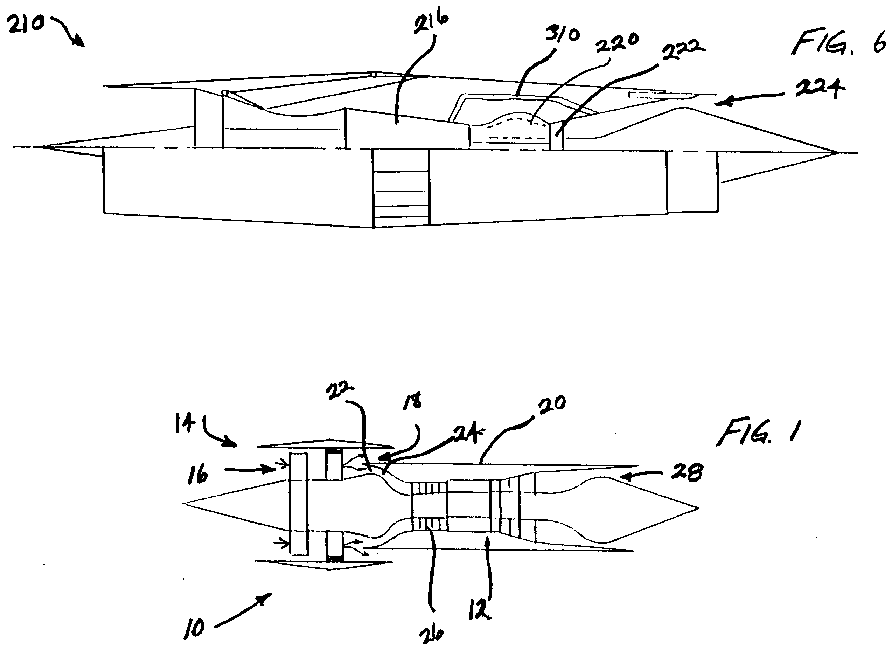

Supersonic through-flow fan engines such as that disclosed in the above-cited paper by Franciscus (NASA Technical Memorandum 78889) have also been proposed for use on supersonic cruise aircraft. Figure 1 schematically depicts a supersonic through-flow fan engine 10 basically comprising a conventional core engine 12 and a supersonic through-flow fan 14. During supersonic operation, air enters the fan 14 at supersonic speeds through a fan inlet 16. The fan 14 compresses the air at a compression ratio of between approximately 3.0 to 3.5. The air exiting the fan 14 is directed both through a duct nozzle 18 to the exterior of the engine nacelle 20 to provide thrust and into a core inlet 22 of the core engine 12. The air entering the core inlet 22 is diffused by a diffuser portion 24 thereof to subsonic speeds so that it may be ingested by the compressor 26 of the core engine 12. The core engine 12 operates on the air ingested thereby in a known manner to provide additional thrust through a nozzle 28.

A supersonic fan engine such as that depicted in Figure 1 has certain advantages over the conventional supersonic turbofan engine. First, the inlet required by the engine 10 is significantly lighter than that required by a conventional supersonic turbofan engine because a conventional supersonic inlet and complex boundary layer bleed system therefor are not required. Second, such engines in their unaugmented form are significantly quieter than turbojet engines.

However, it has been found in detailed mission performance studies that the supersonic fan engine must be scaled up in size and must be augmented by an afterburner in order to provide sufficient thrust. The scaling up of the supersonic fan engine reduces its mission performance by increasing weight and drag, and a supersonic fan engine augmented with an afterburner is significantly louder than the unaugmented version. The supersonic fan engine thus has not been found acceptable for use on supersonic cruise aircraft such as the HSCT.

Variable camber (split-rotor) supersonic through-flow fans have also been proposed, such as that disclosed in a paper entitled "SUPERSONIC FAN/TURBOFAN PRELIMINARY ENGINE STUDY" by Franciscus dated June 10, 1988. A variable camber supersonic through-flow engine operates in two modes: (a) a subsonic compression mode; and (b) a supersonic compression mode. This is accomplished by rotating a portion of the fan rotor about a radial axis. Some of the potential benefits of such engines are that they operate unstarted and with high fan pressure ratio, allow more cycle flexibility, and require a less complex inlet; however, such fans have heretofore not been successfully employed in an engine for supersonic cruise aircraft.

## Objects of the Invention

In view of the foregoing, it is apparent that an important object of the present invention is to provide an engine for supersonic cruise aircraft having a desirable balance of operating efficiencies during both supersonic and subsonic operating modes.

Another important, but more specific, object of the present invention is to provide an engine for supersonic cruise aircraft having a favorable mix of the following factors:

    a. relatively small in size to reduce drag and weight and thereby improve mission performance;

    b. emitting relatively low noise to allow the aircraft on which the engine is mounted to be operated over populated areas;

    c. operating as a turbojet engine in a first mode when operating at transonic and supersonic speeds and as a turbofan engine in a second mode when operating a subsonic speeds;

    d. eliminating the need for a conventional supersonic inlet having a complex boundary layer bleed system;

    e. preventing an undesirable increase in bypass ratio during supersonic cruise; and

    f. effectively employing a supersonic through-flow fan.

## SUMMARY OF THE INVENTION

The above and other objects are achieved by the present invention, which is an engine for supersonic cruise aircraft comprising a supersonic compressor capable of operating in a supersonic compression mode, the compressor being so mounted upstream of a core engine assembly within an engine nacelle that the entire exit flow of the supersonic compressor enters the core engine assembly when the aircraft is operating in a first range of transonic and supersonic speeds. Preferably, the compressor is further capable of operating in a subsonic compression mode when the aircraft is operating in a second range of subsonic speeds. In this case, a portion of the exit flow of the supersonic compressor bypasses the core engine assembly when the aircraft is operating in the second range. The engine may further comprise means for diverting a portion of the compressor exit flow to the exterior of the engine nacelle when the aircraft is operating in the second range.

The engine of the present invention may further comprise means mounted between the supersonic compressor and a compressor of the core engine assembly for diffusing supersonic exit flow of the supersonic compressor to subsonic speeds. Preferably, the diffusing means comprises a first passageway between the supersonic compressor and the core compressor, the first passageway having a first, upstream portion, a second, middle portion, and a third, downstream portion, the engine further comprising means located in the first portion of the first passageway for diverting a portion of the compressor exit flow to the exterior of the engine nacelle when the aircraft is operating in the first range. The diverting means preferably comprises a second passageway and means for selectively allowing air to flow to the exterior of the engine nacelle through the second passageway when the aircraft is operating in the second range. The means for selectively allowing air to flow through the second passageway preferably comprises a door means rotatable between a first position in which the door means prevents air from flowing into the second passageway and a second position in which the door means allows air to flow into the second passageway.

The rotor blades of the supersonic compressor are preferably rotatable such that the angle of the blades relative to a plane normal of the direction of air flow is greater when the aircraft is operating in the second range than in the first range.

The present invention may also be embodied in an engine for supersonic cruise aircraft adapted to operate at both supersonic and subsonic speeds with relatively high efficiency; comprising: (a) a housing structure having an upstream inlet end to receive intake air and a downstream exhaust end to discharge jet exhaust; (b) an air inlet mounted on the upstream end of the housing structure for receiving the intake air; (c) a compressor mounted in the housing rearwardly of the inlet and arranged to compress air flowing into the inlet, said compressor having:(i) a first compressor fan section, where the fan is adapted to operate in a supersonic compression mode and a subsonic compression mode, and (ii) a second compressor section;(d) diffusion means mounted in the housing rearwardly of the first compressor section and forwardly of the second compressor section for diffusing the air compressed by the first compressor section to subsonic speed; (e) means defining a combustion chamber mounted in the housing downstream of said compressor adapted to receive compressed air therefrom; (e) fuel injection and ignition means in the combustion chamber arranged to burn fuel in air flow from the compressor and adapted to provide gaseous flow from the combustion chamber; (g) a turbine mounted in the housing rearwardly of the combustion chamber and arranged to receive gaseous flow from the combustion chamber; and (h) an exhaust nozzle adapted to receive gaseous flow from said turbine and exhaust the flow to produce thrust. The first compressor fan section operates in the supersonic compression mode when the aircraft operates at transonic and supersonic speeds and operates in the subsonic compression mode when the aircraft operates at subsonic speeds.

The present invention may also be embodied in a method of providing thrust to supersonic cruise aircraft comprising the step of so mounting a supersonic compressor upstream of a core engine assembly within an engine nacelle that the entire exit flow of the supersonic compressor enters the core engine assembly when the aircraft is operating in a first range of transonic and supersonic speeds. Preferably, this method further comprises the steps of: (a) operating the supersonic compressor in a subsonic compression mode when the aircraft is operating in a second range of subsonic speeds; and/or (b) diverting a portion of the exit flow of the supersonic compressor to the exterior of the engine nacelle when the aircraft is operating in the second range.

BRIEF DESCRIPTION OF THE DRAWING

Figure 1 depicts a prior art engine employing a supersonic through flow fan;

Figure 2 depicts a first embodiment of a supersonic engine of the present invention, where the engine is depicted in its supersonic cruise mode of operation;

Figure 3 depicts the engine of Figure 2 in its take-off and subsonic cruise mode of operation;

Figure 4 depicts a fan map showing the fan pressure ratio of the supersonic fan employed by the present invention versus corrected airflow for the take-off and supersonic cruise modes of operation;

Figures 5a,b depict an end view of two rotors of the variable camber supersonic fan showing the rotor configurations when the fan is in its subsonic compression mode (Fig. 5a) and supersonic compression mode (Fig. 5b);

Figure 6 depicts a second embodiment of a supersonic engine of the present invention, where the engine further includes a turbine bypass passageway.

Detailed Description of the Preferred Embodiment

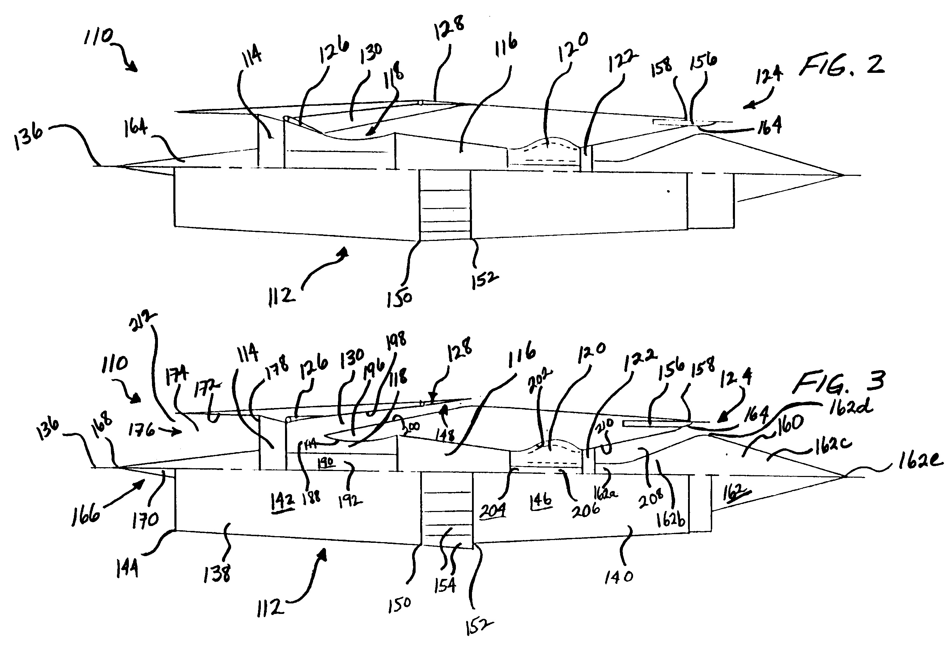

Referring now to the drawing, schematically depicted in Figures 2 and 3 is an engine 110 constructed in accordance with, and embodying, the principles of the present invention. The engine 110 is adapted to provide thrust to a supersonic cruise aircraft and is designed to operate efficiently at both supersonic and subsonic cruise speeds. The engine 110 may be operated in either a first supersonic mode of operation as depicted in Figure 2 or a second subsonic mode of operation as depicted in Figure 3. As will be discussed in detail below, the engine 110 generally operates in the first mode when the aircraft to which it is attached is travelling in a first range of transonic and supersonic speeds and in the second mode when the aircraft to which it is attached operates in a second range of subsonic speeds.

The engine 110 basically comprises: (a) a housing structure or engine nacelle 112; (b) a variable camber supersonic through-flow fan 114; (c) a compressor 116; (d) a convergent/divergent core inlet 118 mounted between the fan 114 and the compressor 116 (e); a combustion chamber 120; (f) a turbine assembly 122; (g) a variable area nozzle 124; (h) a first door assembly 126; (i) and a second door assembly 128. The door assemblies 122 and 124 are each movable between a closed position (Fig. 2) in the first mode and an open position (Fig.

3) in the second mode. The compressor 116, combustion chamber 120, turbine assembly 122 and nozzle 124 form a core engine assembly.

The engine 110 basically operates in the following manner. In the first, or supersonic cruise, mode, airflow enters the supersonic through-flow fan 114, which is operating in a supersonic compression mode, where the air is compressed. Because the first door assembly 126 is closed, substantially all of the airflow from the fan 114 then enters the core inlet 118 where it is diffused to subsonic speeds. The airflow is then compressed in the normal fashion by the compressor 116 and supplied to the combustion chamber 120. Fuel is injected into the chamber 120 where it is ignited to produce the gaseous flow used to impel the turbine assembly 122.

In this just-described first mode, as shown in Figure 2, the engine 110 operates essentially as a turbojet engine. The fan pressure ratio of the supersonic through-flow fan 114 operating in its supersonic compression mode is generally higher than that of a conventional compressor fan; however, because the fan 114 is a supersonic through-flow fan, no diffuser inlet or bleed system therefor need be provided upstream of this fan 114. The weight, pressure loss, and drag benefits of the simplified inlet used in the engine 110 thus compensates for the weight and pressure loss of the core inlet. Accordingly, in its first mode of operation, the engine 110 operates with close to the efficiency of a conventional turbojet engine.

In the second, take-off and subsonic cruise mode of operation, as shown in Figure 3, the fan 114 operates in its subsonic compression mode. The door assemblies 126 and 128 are opened to allow a portion of the airflow that has passed through the compressor 114 to enter a bypass passageway 130 and flow to the exterior of the nacelle 112. In this mode, the engine 110 operates essentially as a turbofan engine with a bypass ratio of approximately 1.0.

Accordingly, during supersonic cruise where noise factors are less of a consideration, the engine 110 may be operated in the first mode at close to the efficiencies of a turbojet engine. However, during subsonic cruise, the engine 110 may be switched into the second mode in which it operates with relatively lower specific fuel consumption and relatively lower noise.

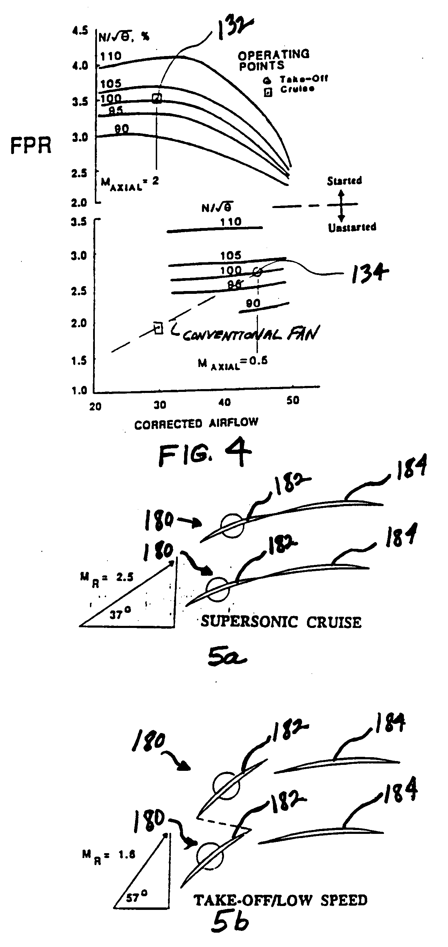

These diverse operating modes are facilitated by the characteristics of the variable camber supersonic through-flow fan 114 as generally depicted in the fan map diagrams of Figure 4. The fan map diagrams depicted in Figure 4 plot the fan pressure ratio versus corrected airflow settings for various rotor speeds for the supersonic through-flow fans operating in its supersonic and subsonic compression modes. The corrected airflow setting is calculated according to the following equation (1):

**CORRECTED AIRFLOW = W$\sqrt{\bar{\theta}}$ / $\delta$**     (1);

where **W** is the Total Mass Flow Rate of the air entering the engine, $\theta$ is the Observed temperature (absolute) divided by standard temperature (518.67° R), and $\delta$ is the observed static pressure divided by standard pressure (2116.22 lbs./sq. ft.). Corrected airflow may be used to evaluate the efficiency of a fan without regard to the Mach number of the airflow entering the engine.

At supersonic cruise the corrected airflow settings will be lower than those for take-off and subsonic cruise. For such reduced corrected airflow settings, the supersonic through-flow fan 114 operates in its supersonic compression mode. As shown in Figure 4, for a corrected airflow setting of 30, the pressure ratio of a supersonic through-flow fan, as indicated at reference character 132, is approximately 3.5. In contrast, the conventional fan would have reduced pressure ratio relative to take-off. At the relatively higher corrected airflow settings expected at take-off and subsonic cruise, the fan 114 operates in its subsonic compression mode. In this mode, the pressure ratio of a the fan 114, as indicated at reference character 134, is approximately 2.7, which is considerably lower than the supersonic cruise pressure ratio, which is opposite the trend of the conventional fan.

A variable camber supersonic through-flow fan such as the fan 114 thus operates relatively efficiently at both the reduced corrected airflow settings that occur at supersonic cruise and the relatively higher corrected airflow settings expected at take-off and subsonic cruise. This is because the supersonic compression mode of the variable camber supersonic through-flow fan 114 produces a significant increase in fan pressure ratio at the reduced corrected airflow settings encountered at supersonic cruise. This causes an increase in the outlet air density of the fan 114, which makes it possible to run the entire fan outlet flow directly into the core inlet 118, eliminating the bypass stream through the bypass passageway 130 altogether. The engine 110 thus prevents undesirable increases in bypass ratio at reduced corrected airflow settings and operates with close to the efficiencies of a turbojet engine at supersonic cruise.

With reference to Figures 2, 3, and 5, the engine 114 of the present invention will now be discussed in further detail. In the following discussion, air flows relative to the engine 110 from the left to the right in Figures 2 and 3; thus the terms "upstream, front" and "downstream, back" will refer to the directions to the left and to the right, respectively, in Figures 2 and 3. Indicated at 136 in Figures 2 and 3 is a centerline or center axis of the engine 110. The terms "inner" and "inward" will refer to the direction extending radially towards the centerline 136, while the terms "outer" and "outward" refer to that direction extending radially away from the centerline 136.

The engine nacelle 112 basically comprises a front portion 138 and a back portion 140. The front and back portions 138 and 140 are coaxially aligned about the centerline 136. A rearwardly radially expanding outer surface 142 of the front portion is arranged with its smaller diameter end projecting upstream to form a cowl lip 144. A rearwardly radially converging outer surface 146 of the back portion 140 of the nacelle 112 is arranged with its larger diameter end facing upstream.

An annular gap 148 is formed in the engine nacelle 112 between the back end 150 of the nacelle front portion 138 and the front end 152 of the nacelle back portion 140. The downstream end of the bypass passageway 130 communicates with the exterior of the nacelle 112 through this gap 148.

The second door assembly 128 is connected to the back end 152 of the nacelle front portion 138 in a manner that allows the door assembly 128 to cover the gap 148. Specifically, the door assembly 128 comprises a plurality of door plates 154 having overlapping edges. The plates 154 are so hinged to the back end of the nacelle front portion 138 that they each rotate about an axis orthogonal to the center line 136. When rotated outwardly, these door plates 154 allow airflow to the exterior of the nacelle through the bypass passageway 130. When rotated inwardly, these plates 154 cover the gap 148 to reduce the amount of drag introduced by the nacelle 112 when the engine 110 is operating in its first supersonic cruise mode.

An exit nozzle member 156 is mounted within the nacelle back portion 140 so that it extends rearwardly from a back edge 158 of the back portion 140. The exit nozzle member 156 is essentially cylindrical in shape and is translatable between a forward position (Fig. 3) and a rear position (Fig. 2).

An aft center body 160 having an outer surface 162 is mounted partially within the nacelle back portion 140. The aft center body 160 comprises a cylindrical forward portion 162a, a rearwardly radially expanding middle portion 162b, and a rearwardly radially converging back portion 162c all coaxially aligned with the centerline 136. The larger diameter ends of the middle portion 162b and back portion 162c are joined at an a maximum diameter portion 162d, with a tip 162e of the aft portion 162c extending aft of the exit nozzle member 156.

In cooperation with the outer surface 162 of the aft center body 160 at the maximum diameter portion 162e, as will be discussed in further detail below, an inner end surface 164 of the nozzle member 156 forms the variable area nozzle 124.

A forward centerbody is indicated at 166 in the drawing. This centerbody 166 is conically shaped and coaxially mounted along the centerline 136 with its tip 168 extending slightly upstream of the cowl lip 144. An outer surface 170 of the centerbody 166 and an inner surface 172 of the nacelle front portion 138 form the inner and outer walls of a front portion 174 of an inlet 176 of the engine 110. This front portion 174 extends between the cowl lip 144 and the fan 114. The cross-sectional area, in a plane normal to the direction of airflow, of this inlet portion 174 gradually decreases in the downstream direction.

An inlet stage 178 of the supersonic through-flow fan 114 is aligned at the downstream end of the inlet portion 174 in a manner that allows the rotors 180 (Fig. 5) of the fan 114 to receive and act upon the airflow through this portion 174.

The operation and operating characteristics of supersonic through-flow fans such as the fan 114 are well-known in the art and will not be discussed in detail herein. However, a brief discussion of the fan 114 will now be provided in order to provide a complete understanding of the present invention.

The fan 114 used in the present invention is a variable camber (split rotor) supersonic fan, although other types of supersonic fans will also work in a similar manner. As shown in Figure 5, each rotor blade 180 comprises a rotatable forward portion 182 and an angularly fixed rearward portion 184. The rotor blade portions 182 and 184 extend radially outwardly. Both portions 182 and 184 of each rotor 180 are radially rotatable about the centerline 136 of the engine 110; the forward rotor portion 182 of each rotor blade 180 is additionally rotatable about an axis normal to the centerline 136.

The forward rotor portion 182 rotates between a supersonic compression mode depicted in Figure 5a and a subsonic compression mode depicted in Figure 5b. In the subsonic compression mode, the tip 186 of each rotor portion 182 is inclined at an angle of approximately 57° relative to the direction of airflow through the engine 110, while, in the supersonic compression mode, this angle is approximately 37° This variable camber feature allows such fans to operate unstarted and with relatively high fan pressure ratios and permits starting into the supersonic mode.

Referring again to the construction of the engine 110 depicted in Figures 2 and 3, located immediately downstream of the fan 114 is a fan exit passageway 188. An inner wall of this fan exit stage passageway 188 is formed by the outer surface 190 of a generally cylindrical shaft shroud 192, and an outer wall thereof is formed by the second door assembly 126. The door assembly 126 is constructed from a plurality of door plates in the same basic manner as the door assembly 128 discussed above, and its construction thus will not be discussed in further detail.

The door assembly is rotated inwardly, as shown in Figure 2, when the engine 110 is operating in its supersonic mode and is rotated outwardly, as shown in Figure 3, when the engine 110 is in its subsonic operating mode.

Immediately downstream of the passageway fan exit stage passageway 188 is the core inlet 118. This core inlet 118 is bounded by the outer surface 190 of the shaft shroud 192 and an inner surface 194 of an annular bypass scoop 196. The bypass scoop inner surface 194 is inwardly convex in a manner that diffuses supersonic airflow at the upstream side of the inlet 118 to subsonic flow at the downstream side thereof. When the door assembly 126 is in its inwardly rotated position shown in Figure 2, the door assembly forms a part of the converging portion of the core inlet 118.

Also located immediately downstream of the fan exit stage passageway 188 is the bypass passageway 130. The bypass passageway 130 is an annular passageway bounded on its upper side by an inner wall 198 of the nacelle front portion 138 and on its lower side by an outer wall 200 of the bypass scoop 196. In the subsonic mode when both door assemblies 126 and 128 are rotated outwardly as shown in Figure 3, the door assembly 126 form a portion of the wall 198. In this mode, air may flow from the fan exit stage passageway 188 to the exterior of the nacelle 112 through the bypass passageway 130. Also, in this mode, the upstream portion of the surface 194 functions as a subsonic inlet.

The basic design of the compressor 116, combustion chamber 120, and turbine 122 are well-known in the art and will be discussed only briefly herein. These components 116, 120, and 122 are located, in the order just set forth, immediately downstream of the core inlet 118. The combustion chamber 120 is defined by an inner wall 202 of the nacelle back portion 140 and an outer wall 204 of a second shaft shroud 206.

The blades of the compressor 116 act on the air flowing therethrough to compress this airflow in the normal manner. Known fuel injection and ignition means are located so that they supply fuel to and ignite fuel in the combustion chamber 120. The turbine 122 receives gaseous flow from the chamber 120. This gaseous flow acts on the blades of the turbine 122 to rotate a shaft (not shown) connected to the turbine 122. The shaft in turn rotates the supersonic through-flow fan 114 and the compressor 116.

A nozzle passageway 208 is formed immediately downstream of the turbine 122. The nozzle passageway 208 is bounded by an inner wall 210 of the nacelle back portion 140 and the outer surface 160 at the front and middle portions 162a and 162b of the aft centerbody 162.

The operation of the present invention will now be discussed. Upon take-off and during subsequent subsonic accelleration and cruise, as depicted in Fig. 3, the door assemblies 126 and 128 are rotated outwardly into their open positions. Additionally, the exit nozzle member 156 is moved into its forwardmost position, and the fan blade forward portions 182 are rotated into the subsonic compression mode. In this configuration, the engine 110 operates in the same basic fashion as a prior art subsonic turbofan engine.

More specifically, air flowing through the inlet 176 defined by the cowl lip 144 and forward centerbody 164 is compressed first by the fan 114 operating in its subsonic compression mode. The airflow exits the fan 114 and enters the fan exit stage passageway 188. Because the first door assembly 128 is open, the bypass scoop 196 divides the fan exit stage airflow into two streams: a bypass stream flowing to the exterior of the engine nacelle 112 through the bypass passageway 130 and annular orifice 148; and a core stream flowing to the compressor 116 through the core inlet 118. The bypass stream provides thrust in the manner of a conventional turbofan engine. The core stream enters the core inlet 118 at subsonic speeds in this mode, at which point it enters the compressor 116 of the core engine assembly. The core engine assembly then generates additional thrust out of the nozzle 124 in a known manner.

At transonic and supersonic aircraft speeds, the door assemblies 126 and 128 are closed, the fan blade forward portions 182 are rotated into the supersonic compression mode, and the exit nozzle member 156 is moved into its rearmost position. In this configuration, the engine 110 operates in a manner similar to that of the prior art turbojet engine.

In particular, the supersonic inlet stream entering the engine inlet 176 is compressed slightly by relatively weak oblique shocks off the centerbody tip 168 and the cowl lip 144. Flow is next compressed by the fan 114 operating in its supersonic compression mode. The entire outlet flow of the fan 114 is directed into the core inlet 118 at supersonic speeds. The flow is then diffused to subsonic speeds by the core inlet 118 and compressed in the normal manner by the compressor 116. The combustion chamber 120, turbine 122, and exit nozzle 124 operate to generate thrust and rotate the turbine shaft (not shown) in the normal manner as briefly discussed above.

A second emdodiment of the present invention is shown in Figure 6. In this second embodiment, an engine 210 is basically the same as engine 110 of the first embodiment. The elements of the second embodiment are given the same reference character plus one hundred as corresponding elements in the first embodiment and will be discussed in detail herein only to the extend necessary for a complete understanding the second embodiment.

The primary difference between the engines 110 and 210 is that the engine 210 further comprises a turbine bypass system 310 that allows a portion the exit flow from the compressor 216 to bypass the turbine 222. A portion of the compressor exit flow flows through the bypass system 310, while the remainder is routed through the combustion chamber 220, turbine 222, and exit nozzle 224. Such turbine bypass is necessary if the components of the engine 210 are so matched that the airflow out of the compressor 216 is too great to be ingested by the turbine 222 under certain flight conditions. Generally, turbine bypass may be necessary during take-off, subsonic cruise, and transonic acceleration.

The present invention as embodied in the engines 110 and 210 thus effectively employs a supersonic through-flow fan in a manner that minimizes the problems inherent in prior art engines for supersonic cruise aircraft. An engine constructed in accordance with the present invention is relatively small because it eliminates the need for a large conventional supersonic inlet and its complex boundary layer bleed system. The present invention thus reduces drag caused by and the weight of the engine in which it is incorporated. Also, because an engine incorporating the principles of the present invention operates as a turbojet engine in a first mode when operating at transonic and supersonic speeds, the present invention is capable of efficient operation at supersonic cruise. Because it emits relatively low noise at subsonic flight conditions, an engine constructed as described above allows the aircraft on which it is mounted to be operated over populated areas. At the same time, the engine incorporating the present invention operates as a relatively efficient turbofan engine when operating in its subsonic mode.

From the foregoing, it should be clear that the present invention may be embodied in forms other than those disclosed above without departing from the spirit or essential characteristics of the present invention. The above-described embodiments are therefore to be considered in all respects illustrative and not restrictive, the scope of the invention being indicated by the appended claims rather than the foregoing description. All changes that come within the meaning and scope of the claims are intended to be embraced therein.

**Claims**

1. An engine for supersonic cruise aircraft comprising a supersonic compressor capable of operating in a supersonic compression mode, the compressor being so mounted upstream of a core engine assembly within an engine nacelle that the entire exit flow of the supersonic compressor enters the core engine assembly when the aircraft is operating in a first range of transonic and supersonic speeds.

2. The engine as recited in claim 1, in which:
   a. the compressor is further capable of operating in a subsonic compression mode when the aircraft is operating in a second range of subsonic speeds; and
   b. a portion of the exit flow of the supersonic compressor bypasses the core engine assembly when the aircraft is operating in the second range.

3. The engine as recited in claim 2 further comprising means for diverting a portion of the compressor exit flow to the exterior of the engine nacelle when the aircraft is operating in the second range.

4. The engine as recited in claim 2 further comprising means mounted between the supersonic compressor and a compressor of the core engine assembly for diffusing supersonic exit flow of the supersonic compressor to subsonic speeds.

5. The engine as recited in claim 4, in which the diffusing means comprises a first passageway between the supersonic compressor and the core compressor, the first passageway having a first, upstream portion, a second, middle portion, and a third, downstream portion, the engine further comprising means located in the first portion of the first passageway for diverting a portion of the compressor exit flow to the exterior of the engine nacelle when the aircraft is operating in the first range.

6. The engine as recited in claim 6, in which the diverting means comprises a second passageway and means for selectively allowing air to flow to the exterior of the engine nacelle through the second passageway when the aircraft is operating in the second range.

7. The engine as recited in claim 5, in which the means for selectively allowing air to flow through the second passageway comprises a door means rotatable between a first position in which the door means prevents air from flowing into the second passageway and a second position in which the door means allows air to flow into the second passageway.

8. The engine as recited in claim 2 further comprising means for so axially rotating a portion of the rotor blades of the supersonic compressor that the angle of the blades relative to a plane normal of the direction of air flow is greater when the aircraft is operating in the second range than in the first range.

9. An engine for supersonic cruise aircraft adapted to operate at both supersonic and subsonic speeds with relatively high efficiency; comprising:

a. a housing structure having an upstream inlet end to receive intake air and a downstream exhaust end to discharge jet exhaust;

b. an air inlet mounted on the upstream end of the housing structure for receiving the intake air;

c. a compressor mounted in the housing rearwardly of the inlet and arranged to compress air flowing into the inlet, said compressor having:

i. a first compressor fan section, where the fan is adapted to operate in a supersonic compression mode and a subsonic compression mode, and

ii. a second compressor section;

d. diffusion means mounted in the housing rearwardly of the first compressor section and forwardly of the second compressor section for diffusing the air compressed by the first compressor section to subsonic speed;

e. means defining a combustion chamber mounted in the housing downstream of said compressor adapted to receive compressed air therefrom;

f. fuel injection and ignition means in the combustion chamber arranged to burn fuel in air flow from the compressor and adapted to provide gaseous flow from the combustion chamber;

g. a turbine mounted in the housing rearwardly of the combustion chamber and arranged to receive gaseous flow from the combustion chamber; and

h. an exhaust nozzle adapted to receive gaseous flow from said turbine and exhaust the flow to produce thrust; wherein the first compressor fan section operates in the supersonic compression mode when the aircraft operates at transonic and supersonic speeds and operates in the subsonic compression mode when the aircraft operates at subsonic speeds.

10. An engine as recited in claim 9, further comprising means mounted between the first compressor fan section and the diffusion means for diverting flow to the exterior of the housing when the first compressor fan section operates in the supersonic compression mode.

11. A method of providing thrust to supersonic cruise aircraft adapted to operate at both supersonic and subsonic speeds at relatively high efficiency, comprising the steps of:

a. providing an engine nacelle having

i. a housing structure having an upstream inlet end to receive intake air and a downstream exhaust end to discharge jet exhaust;

ii. an air inlet mounted on the upstream end of the housing structure for receiving the intake air;

b. supersonically compressing the air flowing into the inlet when the aircraft is operating in a first range of transonic and supersonic speeds;

c. subsonically compressing the air flowing into the inlet when the aircraft is operating in a second range of subsonic speeds;

c. diffusing the compressed, supersonic air to subsonic speeds;

d. further compressing the diffused air;

e. defining a combustion chamber in the housing in which fuel is ignited with the diffused air to provide gaseous flow;

g. providing a turbine in the housing rearwardly of the combustion chamber arranged to receive gaseous flow from the combustion chamber; and

h. exhausting the turbine exit flow to produce thrust.

12. An engine as recited in claim 11, further comprising the step of diverting flow to the exterior of the housing when the aircraft operates in the second range.

210

216  310  220  222

FIG. 6

224

EP 0 560 453 A1

22  18  24  20

14

16

FIG. 1

28

10

26  12

FIG. 2

FIG. 3

EP 0 560 453 A1

FIG. 4

SUPERSONIC CRUISE

5a

TAKE-OFF/LOW SPEED

5b

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| D,Y | US-A-4 435 958 (G.W.KLEES) <br> * abstract; figures * | 1-7,9-11 | F02K3/02 <br> F02C6/20 <br> F02C9/18 <br> F02K3/075 <br> F04D29/32 <br> F01D5/14 |
| Y | | 8 | |
| Y | US-A-5 074 118 (C.E.KEPLER) <br> * column 1, line 16 - column 2, line 14 * <br> * column 3, line 49 - line 68 * <br> * column 4, line 20 - line 42 * <br> * figure 1 * | 1-7,9-11 | |
| Y | CH-A-461 015 (VEB TURBOWERKE MEISSEN) <br> * claims; figure 1 * | 8 | |
| A | FR-A-2 243 330 (N.A.S.A.) | | |
| A | GB-A-2 205 360 (MTU MOTOREN -UND-TURBINEN-UNION GMBH) | | |
| A | GB-A-2 118 248 (ROLLS-ROYCE LTD.) | | |
| A | US-A-4 054 030 (G.H.PEDERSEN) | | TECHNICAL FIELDS SEARCHED (Int. Cl.5) <br><br> F02K <br> F02C <br> F01D <br> F04D |

The present search report has been drawn up for all claims

| Place of search | Date of completion of the search | Examiner |
|---|---|---|
| THE HAGUE | 03 JUNE 1993 | CRIADO Y JIMENEZ, F. |